(19) Europäisches Patentamt / European Patent Office / Office européen des brevets

(11) **EP 4 485 990 A1**

(12) **EUROPEAN PATENT APPLICATION**
published in accordance with Art. 153(4) EPC

(43) Date of publication:
**01.01.2025 Bulletin 2025/01**

(21) Application number: **22927729.8**

(22) Date of filing: **24.02.2022**

(51) International Patent Classification (IPC):
**H04W 24/02** (2009.01)

(52) Cooperative Patent Classification (CPC):
**H04W 24/02;** Y02D 30/70

(86) International application number:
**PCT/CN2022/077764**

(87) International publication number:
**WO 2023/159443 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **FU, Ting
Beijing 100085 (CN)**

(74) Representative: **Dehns Germany Partnerschaft
mbB
Theresienstraße 6-8
80333 München (DE)**

(54) **METHOD AND APPARATUS FOR TRANSMITTING WAKE UP SIGNAL AND READABLE STORAGE MEDIUM**

(57) The present disclosure provides a method and apparatus for transmitting a wake up signal and a readable storage medium, which are applied to the technical field of wireless communication. The method comprises: obtaining first information, wherein the first information is used for determining a first duration corresponding to a time domain area, and the first duration is a first interval from a starting position of the time domain area to a starting position of a monitoring period corresponding to the time domain area, and the monitoring period is used for monitoring a wake up signal corresponding to the time domain area; determining the starting position of the monitoring period on the basis of the first duration; and monitoring the wake up signal on the basis of the starting position of the monitoring period. In the present disclosure, a user equipment determines the starting position of the monitoring period on the basis of the first duration corresponding to the time domain area, so that the wake up signal may be accurately monitored, thereby preventing power consumption loss caused by incorrectly determining the starting position of the monitoring period.

EP 4 485 990 A1

```
┌──────────────────────────────────────────────┐
│  The user equipment acquires a first duration  │  S401
│  corresponding to a time domain range          │
└──────────────────────────────────────────────┘
                      │
                      ▼
┌──────────────────────────────────────────────┐
│  The user equipment determines the starting    │
│  position of the listening period based on the  │  S402
│  first duration, and listens to the wake up     │
│  signal based on the starting position of the   │
│  listening period                               │
└──────────────────────────────────────────────┘
```

FIG. 4

## Description

## TECHNICAL FIELD

The present disclosure relates to the technical field of wireless communication, and in particular, to a method, apparatus for transmitting a wake up signal, and a readable storage medium.

## BACKGROUND

In wireless communication technology, for example, in the 5th Generation Mobile Communication Technology (5G), in order to save the power consumption of the user equipment (UE), the main transceiver can be put into a sleep state.

When the UE is in the radio resource control (RRC) idle state, the UE may periodically listen to the paging message, and after receiving the paging message, it can enter the RRC connection state to perform normal communication. The paging message is carried in the Physical Downlink Shared Channel (PDSCH), and needs to be scheduled by Downlink Control Information (DCI) that is scrambled by the Paging Radio Network Temporary ID (P-RNTI). For a UE, its corresponding paging occasion (PO) occurs periodically, and a plurality of UEs may use the PO resource in the same period, that is, the DCI sent in one PO can be received by the plurality of UEs corresponding to the PO.

The operation of the UE to listen to the paging message is as follows.

The UE listens to whether there is a DCI scrambled by P-RNTI in its corresponding PO. If it detects DCI scrambled by P-RNTI in the PO, and the Short Messages Indicator information field in the DCI shows that the DCI schedules PDSCH containing the paging message, the UE shall receive and demodulate the PDSCH according to the indication of the DCI, where the PDSCH contains the ID of the UE being paged.

After receiving the PDSCH, if the UE finds that the PDSCH does not carry the ID of the UE, the UE is not paged. After receiving the PDSCH, if it is found that the PDSCH carries the ID of the UE, the UE is paged, that is, the UE has received the paging message. If the UE does not hear the DCI scrambled by R-RNTI in its corresponding PO, or if there is such a DCI but the Short Messages Indicator information field in the DCI shows that the DCI does not schedule the PDSCH containing the paging message, then the UE does not receive or demodulate the PDSCH.

The network device may send a wake up signal (WUS), and the WUS may indicate to one or more UEs whether to wake up for downlink listening. For example, the WUS includes 16 bits, corresponding to 16 UEs, and each bit corresponds to one UE. When the bit corresponding to one of the UEs is 1, it indicates to wake up, and the UE turns on the main transceiver to receive downlink signals; when the corresponding bit of the UE is 0, it indicates not to wake up, and the UE keeps the main transceiver in the sleep state.

For the UE, it needs to listen to the WUS signal before its corresponding PO, and how to determine the time to listen to the WUS is a technical problem that needs to be solved.

## SUMMARY

In view of this, the present disclosure provides a method and apparatus for transmitting a wake up signal, and a readable storage medium.

In the first aspect, a method for listening to a wake up signal is provided, which is executed by a user equipment, and the method includes:

obtaining first information, where the first information is used to determine a first duration corresponding to a time domain range; where the first duration is a first gap from a starting position of the time domain range to a starting position of a listening period corresponding to the time domain range, and the listening period is used to listen to a wake up signal corresponding to the time domain range;
determining the starting position of the listening period based on the first duration; and
listening to the wake up signal based on the starting position of the listening period.

In this method, by setting the first duration corresponding to the time domain range, the user equipment can determine the starting position of the listening period based on the first duration, so that the wake up signal can be accurately listened to prevent the power loss caused by the error in determining the starting position of the listening period.

In some possible implementations, the first information is obtained according to a protocol.

In some possible implementations, obtaining the first information includes:
receiving the first information sent by a network device.

In some possible implementations, the time domain range is a monitor occasion (MO) in a paging occasion (PO).

In some possible implementations, the first information is used to indicate the first duration.

In some possible implementations, the first information includes second information and third information, the second information is used to indicate a second gap from the starting position of the time domain range to an end position of the listening period corresponding to the time domain range, and the third information is used to indicate a duration of the listening period.

In some possible implementations, one synchronization information block beam corresponds to more than one monitor occasion (MO) in one PO, and the time domain range is a first monitor occasion in the more than one monitor occasion (MO).

In some possible implementations, the first duration is an absolute time value, or,

the first duration is a value in a unit of a first time domain unit, or,
the first duration consists of a frame-level gap and a symbol-level gap.

In some possible implementations, the time domain range is a paging occasion (PO).

In some possible implementations, determining the starting position of the listening period based on the first duration includes:
determining a first moment based on the first duration and the starting position of the paging occasion (PO), where the first moment is the starting position of the listening period.

In some possible implementations, the method further includes:

obtaining fourth information according to a protocol, or receiving the fourth information sent by a network device; where the fourth information is used to indicate offsets corresponding to M monitor occasions in the paging occasion (PO), the offset is an offset of the starting position of the listening period corresponding to the monitor occasion relative to the first moment, and the listening period corresponding to the monitor occasion is used to listen to a wake up signal corresponding to the monitor occasion; where M is a number of beams corresponding to the paging occasion (PO);
determining the starting position of the listening period corresponding to the monitor occasion based on the offset and the first moment.

In some possible implementations, the method further includes:

obtaining fifth information according to a protocol, or receiving the fifth information sent by a network device; where the fifth information is used to indicate a first step length, and the first step length is an offset of a third moment relative to a second moment, the third moment is a starting moment of a listening period corresponding to a latter monitor occasion (MO) in two adjacent monitor occasions (MOs), and the second moment is a starting moment of a listening period corresponding to a previous monitor occasion (MO) in the two adjacent monitor occasions (MOs);
determining the starting position of the listening period corresponding to each monitor occasion in the paging occasion (PO) based on the first moment and the first step length.

In some possible implementations, the first step length is longer than a duration of the wake up signal.

In some possible implementations, one synchronization information block beam corresponds to more than one monitor occasion (MO) in one PO, and M monitor occasions in the paging occasion (PO) include a first monitor occasion in one PO corresponding to each synchronization information block beam.

In some possible implementations, the time domain range is a paging frame (PF).

In some possible implementations, the method further includes:
determining the starting position of the listening period based on the first duration includes:
determining a fourth moment based on the first duration and a starting position of the paging frame (PF), where the fourth moment is the starting position of the listening period.

In some possible implementations, the method further includes:

obtaining sixth information according to a protocol, or receiving the sixth information sent by a network device; where the sixth information is used to indicate an offset corresponding to each paging occasion (PO) corresponding to the paging frame (PF), the offset is an offset of the starting position of the listening period corresponding to the paging occasion (PO) relative to the fourth moment, and the listening period corresponding to the paging occasion (PO) is used to listen to the wake up signal corresponding to the paging occasion (PO);
determining the starting position of the listening period corresponding to the paging occasion corresponding to the paging frame (PF) based on the fourth moment and the offset.

In some possible implementations, the method further includes:

obtaining seventh information according to a protocol, or receiving the seventh information sent by a network device; where the seventh information is used to indicate a second step length, and the second step length is an offset of a sixth moment relative to a fifth moment, the sixth moment is a starting moment of a listening period corresponding to a latter paging occasion (PO) in two adjacent paging occasions (POs), and the fifth moment is a starting moment of a listening period corresponding to a previous paging occasion (PO) in the two adjacent paging occasions (Pos);
determining the starting position of the listening period corresponding to the paging occasion corresponding to the paging frame (PF) based on the fourth moment and the second step length.

In some possible implementations, the second step length is greater than or equal to a first product, where the first product is a product of a number of synchronization signal blocks and a duration of a wake up signal.

In some possible implementations, the method further includes:

obtaining eighth information according to a protocol, or receiving the eighth information sent by a network device; where the eighth information is used to indicate offsets corresponding to N monitor occasions in the paging occasion (PO), where the offset is an offset of the starting position of the listening period corresponding to the monitor occasion relative to the starting position of the listening period corresponding to the paging occasion, and the listening period corresponding to the paging occasion (PO) is used to listen to a wake up signal corresponding to the paging occasion (PO), where N is a number of beams corresponding to the paging occasion (PO);

determining the starting position of the listening period corresponding to the monitor occasion based on the offset and the starting position of the listening period corresponding to the paging occasion.

In some possible implementations, the method further includes:

obtaining ninth information according to a protocol, or receiving the ninth information sent by a network device, where the ninth information is used to indicate a third step length, and the third step length is an offset of an eighth moment relative to a seventh moment, where the eighth moment is a starting moment of a listening period corresponding to a latter monitor occasion (MO) in two adjacent monitor occasions (MOs), and the seventh moment is a starting moment of a listening period corresponding to a previous monitor occasion (MO) in the two adjacent monitor occasions (MOs);

determining the starting position of the listening period corresponding to the monitor occasion based on the third step length and the starting position of the listening period corresponding to the paging occasion.

In some possible implementations, a wake up signal corresponding to the paging frame (PF) includes an identifier of the paging frame (PF).

In some possible implementations, a wake up signal corresponding to the paging occasion (PO) includes an identifier of the paging occasion (PO).

In some possible implementations, a frequency domain position of the wake up signal is one of following:

being the same as a frequency domain position of a synchronization signal block;

being the same as a frequency domain position of a resource set CORESET#0;

being the same as a frequency domain position of an initial bandwidth part.

In the second aspect, a method for sending a wake up signal is provided, which is executed by a network device, and the method includes:

sending first information to a user equipment; where the first information is used to determine a first duration corresponding to a time domain range, the first duration is a first gap from a starting position of the time domain range to a starting position of a listening period corresponding to the time domain range, and the listening period is used to listen to a wake up signal corresponding to the time domain range; and sending a wake up signal.

In this method, by configuring the first duration corresponding to the time domain range, the user equipment can determine the starting position of the listening period based on the first duration, so that the wake up signal can be accurately listened to prevent the power loss caused by the error in determining the starting position of the listening period.

The time domain range is a monitor occasion (MO) in a paging occasion (PO).

In some possible implementations, the first information is used to indicate the first duration.

In some possible implementations, the first information includes second information and third information, the second information is used to indicate a second gap from the starting position of the time domain range to an end position of the listening period corresponding to the time domain range, and the third information is used to indicate a duration of the listening period.

In some possible implementations, one synchronization information block beam corresponds to more than one monitor occasion (MO) in one PO, and the time domain range is a first monitor occasion in the more than one monitor occasion (MO).

In some possible implementations, the first duration is an absolute time value, or,

the first duration is a value in a unit of a first time domain unit, or,

the first duration consists of a frame-level gap and a symbol-level gap.

In some possible implementations, the time domain range is a paging occasion (PO).

In some possible implementations, the method further includes:

sending fourth information to the user equipment; where the fourth information is used to indicate offsets corresponding to M monitor occasions in the paging occasion (PO), and the offset is an offset of the starting position of the listening period corresponding to the monitor occasion relative to the first moment, and the listening period corresponding to the monitor occasion is used to listen to the wake up signal corresponding to the monitor occasion; where M is a number of beams corresponding to the paging occasion (PO), the first moment is the starting position of the listening period.

In some possible implementations, the method further includes:
sending fifth information to the user equipment; where the fifth information is used to indicate a first step length, and the first step length is an offset of a third moment relative to a second moment, the third moment is a starting moment of a listening period corresponding to a latter monitor occasion (MO) in two adjacent monitor occasions (MOs), and the second moment is a starting moment of a listening period corresponding to a previous monitor occasion (MO) in the two adjacent monitor occasions (MOs).

In some possible implementations, the method further includes:
the first step length is longer than a duration of the wake up signal.

In some possible implementations, one synchronization information block beam corresponds to more than one monitor occasion (MO) in one PO, and M monitor occasions in the paging occasion (PO) include a first monitor occasion in one PO corresponding to each synchronization information block beam.

In some possible implementations, the time domain range is a paging frame (PF).

In some possible implementations, the method further includes:
sending sixth information to the user equipment; where the sixth information is used to indicate an offset corresponding to each paging occasion (PO) corresponding to the paging frame (PF), the offset is an offset of the starting position of the listening period corresponding to the paging occasion (PO) relative to a fourth moment, and the listening period corresponding to the paging occasion (PO) is used to listen to the wake up signal corresponding to the paging occasion (PO); the fourth moment is the starting position of the listening period.

In some possible implementations, the method further includes:
sending seventh information to the user equipment; where the seventh information is used to indicate a second step length, and the second step length is an offset of a sixth moment relative to a fifth moment, the sixth moment is a starting moment of a listening period corresponding to a latter paging occasion (PO) in two adjacent paging occasions (POs), and the fifth moment is a starting moment of a listening period corresponding to a previous paging occasion (PO) in the two adjacent paging occasions (POs).

In some possible implementations, the method further includes:
the second step length being greater than or equal to a first product, where the first product is a product of a number of synchronization signal blocks and a duration of a wake up signal.

In some possible implementations, the method further includes:
sending eighth information to the user equipment; where the eighth information is used to indicate offsets corresponding to N monitor occasions in the paging occasion (PO), where the offset is an offset of the starting position of the listening period corresponding to the paging occasion relative to the starting position of the listening period corresponding to the paging occasion, and the listening period corresponding to the paging occasion (PO) is used to listen to a wake up signal corresponding to the paging occasion (PO), where N is a number of beams corresponding to the paging occasion (PO).

In some possible implementations, the method further includes:
sending ninth information to the user equipment, where the ninth information is used to indicate a third step length, and the third step length is an offset of an eighth moment relative to a seventh moment, where the eighth moment is a starting moment of a listening period corresponding to a latter monitor occasion (MO) in two adjacent monitor occasions (MOs), and the seventh moment is a starting moment of a listening period corresponding to a previous monitor occasion (MO) in the two adjacent monitor occasions (MOs).

In some possible implementations, a wake up signal corresponding to the paging frame (PF) includes an identifier of the paging frame (PF).

In some possible implementations, a wake up signal corresponding to the paging occasion (PO) includes an identifier of the paging occasion (PO).

In some possible implementations, a frequency domain position of the wake up signal is one of following:

   being the same as a frequency domain position of a synchronization signal block;
   being the same as a frequency domain position of a resource set CORESET#0;
   being the same as a frequency domain position of an initial bandwidth part.

In the third aspect, a communication apparatus is provided. The communication apparatus may be used to execute the steps performed by the user equipment in the above first aspect or any possible design of the first aspect. The user equipment can implement each function in the above methods in the form of a hardware structure, a software module, or a hardware structure plus a software module.

When the method shown in the first aspect is implemented by the software module, the communication apparatus may include a transceiver module and a processing module.

When performing the steps described in the first aspect above, the processing module is configured to obtain first information, where the first information is used to determine a first duration corresponding to a time domain range; where the first duration is a first gap from a starting position of the time domain range to a starting position of a listening period corresponding to the time domain range, and the listening period is used to listen to a wake up signal corresponding to the time domain range; further configured to determine the starting position of the listening period based on the first duration; and further configured to listen to the wake up signal based on the starting position of the listening period.

In the fourth aspect, a communication apparatus is provided. The communication apparatus may be used to execute the steps executed by the network device in the above second aspect or any possible design of the second aspect. The user equipment can implement each function in the above methods in the form of a hardware structure, a software module, or a hardware structure plus a software module.

When the method shown in the second aspect is implemented by the software module, the communication device may include a transceiver module.

When performing the steps described in the second aspect above, the transceiver module is configured to send first information to a user equipment; where the first information is used to determine a first duration corresponding to a time domain range, the first duration is a first gap from a starting position of the time domain range to a starting position of a listening period corresponding to the time domain range, and the listening period is used to listen to a wake up signal corresponding to the time domain range; further configured to send a wake up signal.

In the fifth aspect, a communication apparatus is provided, including a processor and a memory; the memory is configured to store a computer program; the processor is configured to execute the computer program, so as to implement the first aspect or any possible design of the first aspect.

In the sixth aspect, a communication apparatus is provided, including a processor and a memory; the memory is configured to store a computer program; the processor is configured to execute the computer program, so as to implement the second aspect or any possible design of the second aspect.

In the seventh aspect, a computer-readable storage medium is provided, instructions (or computer programs, programs) are stored in the computer-readable storage medium, and when they are invoked and executed on a computer, the computer executes the above-mentioned first aspect or any possible design of the first aspect.

In the eighth aspect, a computer-readable storage medium is provided, instructions (or computer programs, programs) are stored in the computer-readable storage medium, and when they are invoked and executed on a computer, the computer executes the above-mentioned second aspect or any possible design of the second aspect.

It is to be understood that both the foregoing general description and the following detailed description are exemplary and explanatory only and are not restrictive of the present disclosure.

## BRIEF DESCRIPTION OF THE DRAWINGS

The accompanying drawings described here are used to provide a further understanding of the embodiments of the present disclosure, and constitute a part of the present application. The schematic embodiments of the embodiments of the present disclosure and their descriptions are used to explain the embodiments of the present disclosure, and do not constitute an undue limitation to the embodiments of the present disclosure. In the accompanying drawings:

The accompanying drawings, which are incorporated in and constitute a part of this specification, illustrate embodiments consistent with the embodiments of the present disclosure and together with the specification, serve to explain the principles of the embodiments of the present disclosure.

FIG. 1 is a schematic diagram of an architecture of a wireless communication system provided by an embodiment of the present disclosure;

FIG. 2 is a schematic diagram showing a paging occasion including a monitor occasion in a multibeam scenario according to an exemplary embodiment;

FIG. 3 is a flowchart showing a method for transmitting a wake up signal according to an exemplary embodiment;

FIG. 4 is a flowchart of a method for listening to a wake up signal according to an exemplary embodiment;

FIG. 5 is a flowchart of a method for listening to a wake up signal according to an exemplary embodiment;

FIG. 6 is a schematic diagram of setting a first duration corresponding to a monitor occasion according to an exemplary embodiment;

FIG. 7 is a flowchart of a method for listening to a wake up signal according to an exemplary embodiment;

FIG. 8 is a flowchart of a method for listening to a wake up signal according to an exemplary embodiment;

FIG. 9 is a schematic diagram of setting a first duration corresponding to a paging occasion according to an exemplary embodiment;

FIG. 10 is a flowchart showing a method for listening to a wake up signal according to an exemplary embodiment;

FIG. 11 is a schematic diagram of setting a first duration corresponding to a paging frame according to an exemplary embodiment;

FIG. 12 is a structural diagram of an apparatus for listening to a wake up signal according to an exemplary embodiment;

FIG. 13 is a structural diagram of an apparatus for listening to a wake up signal according to an exemplary embodiment;

FIG. 14 is a structural diagram of an apparatus for sending a wake up signal according to an exemplary embodiment;

FIG. 15 is a structural diagram of an apparatus for sending a wake up signal according to an exemplary embodiment.

## DETAILED DESCRIPTION

Embodiments of the present disclosure will now be further described in conjunction with the accompanying drawings and specific implementations.

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with some aspects of the present disclosure as recited in the appended claims.

Terms used in the embodiments of the present disclosure are for the purpose of describing specific embodiments only, and are not intended to limit the embodiments of the present disclosure. As used in the embodiments of the present disclosure and the appended claims, the singular forms "a" and "the" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the words "if" and "in a case that" as used herein may be interpreted as "at" or "when" or "in response to a determination."

Embodiments of the present disclosure are described in detail below, examples of which are illustrated in the accompanying drawings. The like or similar reference numerals designate like or similar elements throughout. The embodiments described below by referring to the accompanying drawings are exemplary and are intended to explain the present disclosure, and should not be construed as limiting the present disclosure.

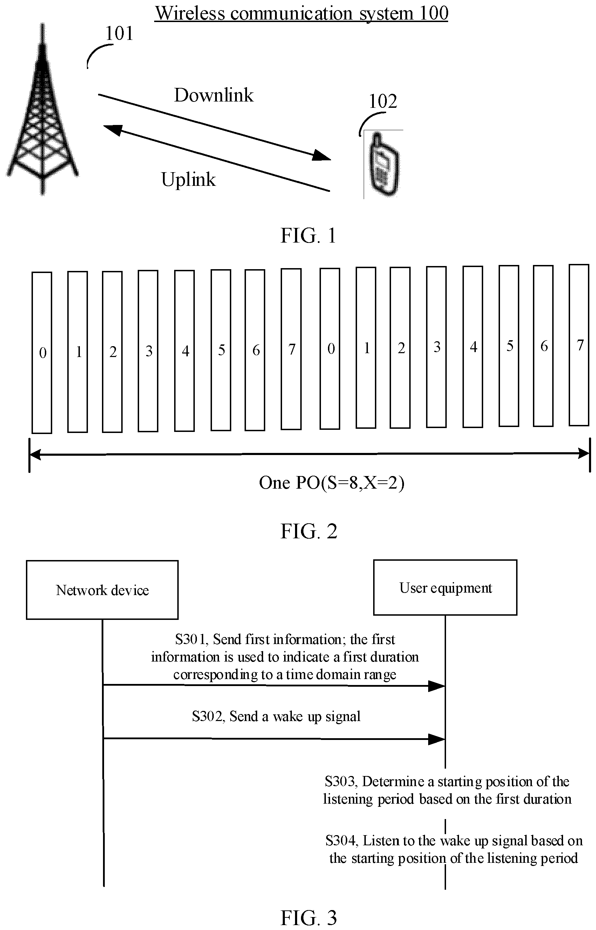

As shown in FIG. 1, a method for listening to a wake up signal provided by an embodiment of the present disclosure may be applied to a wireless communication system 100, which may include but not limited to a network device 101 and a user equipment 102. The user equipment 102 is configured to support carrier aggregation, and the user equipment 102 can be connected to a plurality of component carriers of the network device 101, the component carriers including one primary component carrier and one or more secondary component carriers.

It should be understood that the above wireless communication system 100 may be applicable to both low-frequency scenarios and high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or future evolved public land mobile network (PLMN) system, etc.

The user equipment 102 shown above may be a user equipment (UE), a terminal, an access terminal, a terminal unit, a terminal station, a mobile station (MS), a remote station, a remote terminal, a mobile terminal, a wireless communication device, a terminal agent or a user device, etc. The user equipment 102 may have a wireless transceiver function, which can communicate (such as wireless communication) with one or more network devices 101 of one or more communication systems, and accept network services provided by the network device 101, where the network device 101 includes but not limited to the illustrated base station.

The user equipment 102 may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a user equipment in future 5G networks or a user equipment in future evolved PLMN networks, etc.

The network device 101 may be an access network device (or called an access network site). The access network device refers to a device that provides a network access function, such as a radio access network (RAN) base station and the like. Specifically, the network device may include a base station (BS) device, or include a base station device and a radio resource management device for controlling the base station device, and the like. The network device may also include a relay station (relay device), an access point, and a base station in a future 5G network, a base station in a future evolved PLMN network or an NR base station, and the like. The network device may be a wearable device or a vehicle-mounted device. The network device may also be a communication chip with a communication module.

For example, the network device 101 includes, but is not limited to: a next-generation base station (gnodeB, gNB) in 5G, an evolved node B (evolved node B, eNB) in an LTE system, a radio network controller (RNC), a node B (NB) in WCDMA system, a wireless controller in CRAN system, a base station controller (BSC), a base transceiver station (BTS) in GSM system or CDMA system, a home base station (for example, a home evolved nodeB, or a home node B, HNB), a baseband unit (BBU), a transmitting and receiving point (TRP), a transmitting point (TP) or a mobile switching center, etc.

One paging frame (PF) contains Ns paging occasions (POs), and POs are distributed in $T/N$ paging frames starting from the paging frame (PF), where T is the paging cycle of the UE, N is the number of PFs in one paging cycle.

In the case where each beam in a multi-beam scenario corresponds to 1 MO, one PO corresponds to the monitor occasions (MOs) on all S synchronization signal block beams (SSB beams) in the cell, each beam corresponds to 1 MO, then one PO includes S MOs in total.

In an example, X=1, S=4, that is, one PO corresponds to 4 beams, and each beam corresponds to 1 MO, then 1 PO includes 4 MOs.

In the case where each beam in a multi-beam scenario corresponds to a plurality of MOs, one PO corresponds to the monitor occasions (MOs) on all S synchronization signal block beams (SSB beams) in the cell, and each beam corresponds to X MOs (X is an integer greater than 1), then one PO includes S*X MOs in total.

In an example, S is 8, and X is 2, then one PO includes 16 MOs in total. As shown in FIG. 2, each rectangle corresponds to one MO, and the number in each MO corresponds to a beam index of the SSB where the MO is located.

An embodiment of the present disclosure provides a method for listening to a wake up signal, and the method includes the following steps.

In step S 1, the user equipment 102 obtains first information according to a protocol.

The first information is used to indicate a first duration corresponding to a time domain range, the first duration is a gap from a starting position of the time domain range to a starting position of a listening period corresponding to the time domain range, and the listening period is used to listen to a wake up signal corresponding to the time domain range.

In step S2, the user equipment 102 determines a starting position of the listening period based on the first duration.

In step S3, the user equipment 102 listens to the wake up signal based on the starting position of the listening period.

In the embodiment of the present disclosure, the user equipment obtains the first duration corresponding to the time domain range according to the protocol, and determines the starting position of the listening period based on the first duration, so that the wake up signal can be accurately listened, preventing the power loss caused by determining a wrong starting position of the listening period.

An embodiment of the present disclosure provides a method for listening to a wake up signal. FIG. 3 is a flowchart of a method for listening to a wake up signal according to an exemplary embodiment. As shown in FIG. 3, the method includes the following steps.

In step S301, the network device 101 sends first information.

The first information sent by the network device 101 is used to indicate a first duration corresponding to a time domain range; where the first duration is used to determine a first duration corresponding to the time domain range, and a starting position of the listening period corresponding to the time domain range is determined based on the first duration; the first duration is a gap from a starting position of the time domain range to the starting position of the listening period corresponding to the time domain range, and the listening period is used to listen to a wake up signal corresponding to the time domain range.

The user equipment 102 determines the first duration corresponding to the time domain range based on the first information.

In step S302, the network device 101 sends a wake up signal.

In step S303, the user equipment 102 determines the starting position of the listening period based on the first duration.

In step S304, the user equipment 102 listens to the wake up signal based on the starting position of the listening period.

In some possible implementations, the first duration may be defined as a gap.

In some possible implementations, the time domain range is a monitor occasion (MO) in a paging occasion (PO).

In some possible implementations, the time domain range is a paging occasion (PO).

In some possible implementations, the time domain range is a paging frame (PF).

In the embodiments of the present disclosure, the network device configures the first duration corresponding to the time domain range for the user equipment, and the user equipment can determine the starting position of the listening period based on the first duration, so that the wake up signal can be accurately listened, preventing the power loss caused by determining a wrong starting position of the listening period.

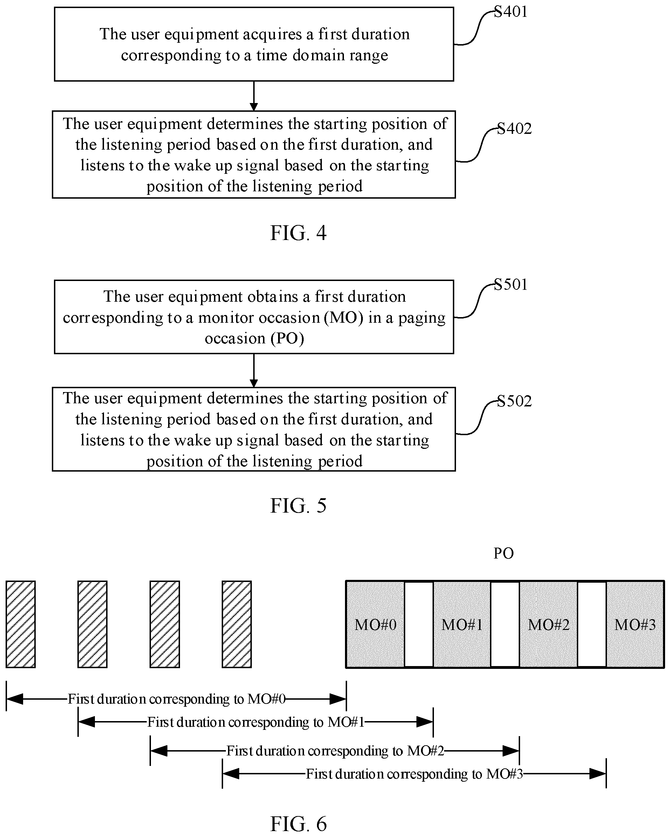

In the embodiment of the present disclosure, a method for listening to a wake up signal is provided by combining the above two embodiments, and the method may be executed independently, or may be executed in combination with any other embodiment in the embodiments of the present disclosure. FIG. 4 is a flowchart of listening to a wake up signal according to an exemplary embodiment. As shown in FIG. 4, the method includes the following steps S401 to 402.

In step S401, the user equipment acquires a first duration corresponding to a time domain range.

The first duration corresponding to the time domain range acquired by the user equipment is a gap from a starting position of the time domain range to a starting position of a listening period corresponding to the time domain range, and the listening period is used to listen to a wake up signal corresponding to the time domain range.

In an implementation of the present application, the user equipment acquires first information according to a protocol, and the first information is used to determine the first duration corresponding to the time domain range.

In an implementation of the present application, before step S401, the method also includes: before sending a wake up signal to the user equipment, the network device sending first information to the user equipment; where the first information is used to determine the first duration corresponding to the time domain range.

In an implementation of the present application, the first duration may be defined as a gap, and may also be one of the following:

an absolute time value,
a value in a unit of a first time domain unit,
consisting of a frame-level gap and a symbol-level gap.

For example, when the first duration is an absolute time value, the specific value is 1000 milliseconds.

In another example, when the first duration is a value in a unit of a first time domain unit, the first time domain unit is a slot, and the first duration is 500 slots.

In another example, when the first duration consists of a frame-level gap and a symbol-level gap, the frame-level gap is 100 system frames, and the symbol-level gap is 70 OFDM symbols.

In an implementation of the present application, the first duration may be a duration corresponding to time domain ranges of different types, and the time domain range may be one of the following: a monitor occasion (MO) in a paging occasion (PO), a paging occasion (PO), and a paging frame (PF).

In step S402, the user equipment determines the starting position of the listening period based on the first duration, and listens to the wake up signal based on the starting position of the listening period.

In an implementation of the present application, a frequency domain position corresponding to the wake up signal may be one of the following:
a frequency domain position corresponding to a synchronization signal block, a frequency domain position corresponding to a control resource set CORESET#0, and a frequency domain position corresponding to an initial BWP.

The frequency domain position corresponding to the wake up signal is set in such a way that after receiving the corresponding signal at the corresponding frequency domain position, the user equipment in the RRC idle state continues to use this frequency domain position to receive the wake up signal without adjusting the radio frequency processing parameters.

In the embodiments of the present disclosure, by setting the first duration corresponding to the time domain range, the user equipment can determine the starting position of the listening period corresponding to the time domain range based on the first duration, so that the wake up signal can be accurately listened to prevent the power loss due to determining a wrong starting position of the listening period.

An embodiment of the present disclosure provides a method for listening to a wake up signal, which is applicable to the case where the time domain range is a monitor occasion (MO). FIG. 5 is a flowchart of listening to a wake up signal according to an exemplary embodiment. As shown in FIG. 5, the method includes steps S501 to 503.

In step S501, the user equipment obtains a first duration corresponding to a monitor occasion (MO) in a paging occasion (PO).

The first duration corresponding to the monitor occasion (MO) is a gap from a starting position of the monitor occasion (MO) to a starting position of a listening period corresponding to the monitor occasion (MO), and the listening period is used for listening to a wake up signal corresponding to the monitor occasion (MO).

In an implementation of the present application, the user equipment obtains the first duration corresponding to the monitor occasion (MO) in the paging occasion (PO) according to the protocol.

In an implementation of the present application, the user equipment obtains first information according to a protocol, and the first information is used to determine the first duration corresponding to the time domain range.

In an implementation of the present application, before step S501, the method also includes: before sending the wake up signal to the user equipment, the network device sending first information to the user equipment; where the first information is used to determine the first duration corresponding to the monitor occasion (MO).

In some possible implementations, one synchronization information block beam corresponds to one monitor occasion (MO) in one paging occasion (PO), and the time domain range is the monitor occasion corresponding to the synchronization information block beam.

In an example, as shown in FIG. 6, one paging occasion (PO) includes four monitor occasions (MOs), and one synchronization information block beam corresponds to only one monitor occasion (MO) in one paging occasion (PO), then the first duration corresponding to each monitor occasion (MO) is determined, that is, the first duration corresponding to MO#0, the first duration corresponding to MO#1, the first duration corresponding to MO#2, and the first duration corresponding to MO#3.

In some possible implementations, one synchronization information block beam corresponds to more than one monitor occasion (MO) in one paging occasion (PO), and the time domain range is the first monitor occasion of the more than one monitor occasion (MO).

A plurality of MOs in the same PO corresponding to the same synchronization information block beam correspond to the same wake up signal.

In an example, one synchronization information block beam corresponds to two MOs in the same PO, then the first durations corresponding to the two MOs are the same, and are calculated based on the starting position of the first MO.

In an implementation of the present application, the first duration may be defined as a gap, and may also be one of the following:

an absolute time value,
a value in a unit of a first time-domain unit,
consisting of a frame-level gap and a symbol-level gap.

In step S502, the user equipment determines the starting position of the listening period based on the first duration, and listens to the wake up signal based on the starting position of the listening period.

In an implementation of the present application, the frequency domain position corresponding to the wake up signal may be one of the following:
a frequency domain position corresponding to a synchronization signal block, a frequency domain position corresponding to a control resource set CORESET#0, and a frequency domain position corresponding to an initial BWP.

The frequency domain position corresponding to the wake up signal is set in such a way that after receiving the corresponding signal at the corresponding frequency domain position, the user equipment in the RRC idle state continues to use this frequency domain position to receive the wake up signal without adjusting the radio frequency processing parameters.

In the embodiment of the present disclosure, by setting the first duration corresponding to the monitor occasion (MO), the user equipment can determine the starting position of the listening period corresponding to the monitor occasion (MO) based on the first duration, so that the wake up signal can be accurately listened to prevent the power loss caused by determining a wrong starting position of the listening period.

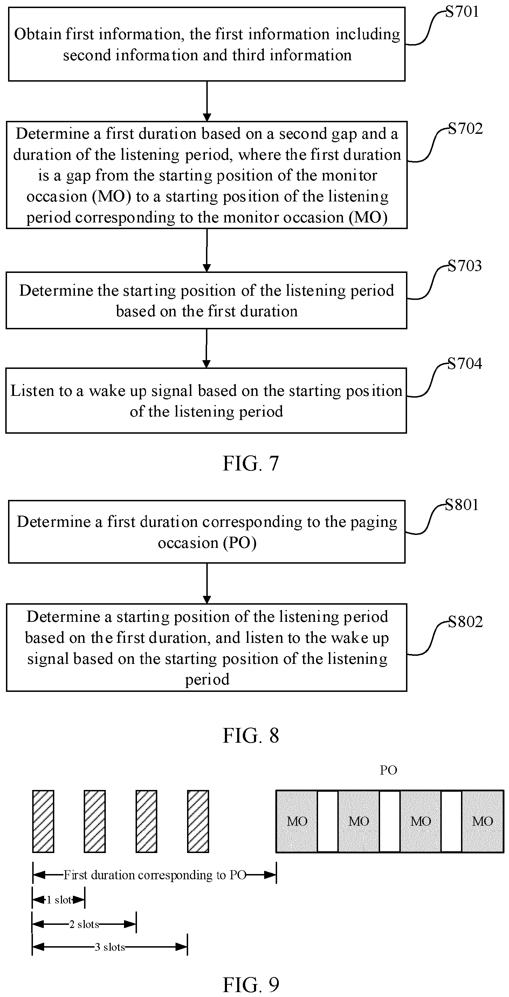

An embodiment of the present disclosure provides a method for listening to a wake up signal, which is executed by a user equipment, and is applicable to a situation where the time domain range is a monitor occasion (MO). FIG. 7 is a flowchart of listening to a wake up signal according to an exemplary embodiment. As shown in FIG. 7, the method includes the following steps.

In step S701, first information is obtained, where the first information includes second information and third information.

The second information is used to indicate a second gap between a starting position of the monitor occasion (MO) and an end position of a listening period corresponding to the monitor occasion (MO), and the listening period is used to listen to a wake up signal corresponding to the monitor occasion (MO). The third information is used to indicate a duration of the listening period.

In step S702, a first duration is determined based on the second gap and the duration of the listening period, where the first duration is a gap from the starting position of the monitor occasion (MO) to a starting position of the listening period corresponding to the monitor occasion (MO).

A second duration can be calculated according to the first information and the third information, and the second duration is a gap between the starting position of the monitor occasion (MO) and the end position of the listening period corresponding to the monitor occasion (MO).

In an implementation of the present application, the first duration may be defined as a gap, and may also be one of the following:

an absolute time value,
a value in a unit of a first time domain unit,
consisting of a frame-level gap and a symbol-level gap.

In step S703, the starting position of the listening period is determined based on the first duration.

In step S704, a wake up signal is listened based on the starting position of the listening period.

In the embodiment of the present disclosure, by setting the second gap and the duration of the listening period, and determining the first duration corresponding to the monitor occasion (MO) based on the second duration and the duration of the listening period, the user equipment determines the starting position of the listening period corresponding to the monitor occasion (MO) based on the first duration, so that the wake up signal can be accurately listened, and power consumption loss caused by determining a wrong starting position of the listening period can be prevented.

An embodiment of the present disclosure provides a method for listening to a wake up signal, which is executed by a user equipment, and is applicable to a case where the time domain range is a paging occasion (PO). FIG. 8 is a flowchart of listening to a wake up signal according to an exemplary embodiment. As shown in FIG. 8, the method includes the following steps.

In step S801, a first duration corresponding to the paging occasion (PO) is determined.

The first duration is a gap from a starting position of the paging occasion (PO) to a starting position of a listening period corresponding to the paging occasion (PO), and the listening period is used for listening to a wake up signal corresponding to the paging occasion (PO).

In an implementation of the present application, the user equipment obtaining the first duration corresponding to the paging occasion (PO) includes one of the following:

> obtaining according to a protocol, and
> receiving first information for indicating the first duration corresponding to the paging occasion (PO) sent by a network device.

In an example, as shown in FIG. 9, one paging occasion (PO) includes four monitor occasions (MOs), and the first duration corresponding to the paging occasion (PO) is determined.

In an implementation of the present application, the first duration may be defined as a gap, and may also be one of the following:

> an absolute time value,
> a value in a unit of a first time domain unit,
> consisting of a frame-level gap and a symbol-level gap.

In step S802, a starting position of the listening period is determined based on the first duration, and the wake up signal is listened based on the starting position of the listening period.

In some possible implementations, one synchronization information block beam corresponds to more than one monitor occasion (MO) in one PO, and M monitor occasions in the paging occasion (PO) include the first monitor occasion in one PO corresponding to each synchronization information block beam.

A plurality of MOs in the same PO corresponding to the same synchronization information block beam correspond to the same wake up signal.

In an example, one synchronization information block beam corresponds to 2 MOs in the same PO, and the gaps corresponding to these 2 MOs (the gap is a gap between the starting position of the MO and the starting position of the listening period corresponding to this MO) are the same, both are calculated based on the starting position of the first MO.

The wake up signal corresponding to the paging occasion (PO) includes an identifier of the paging occasion (PO). Therefore, if the listening periods corresponding to two paging occasions (POs) overlap, the UE can distinguish whether the received wake up signal corresponds to the paging occasion (PO) corresponding to this UE.

In some possible implementations, since one paging occasion (PO) corresponds to the monitor occasions (MOs) on a plurality of beams, for the UE covered by different beams, in the way of beam sweeping, the time of receiving the wake up signal corresponding to the same paging occasion (PO) is also different. Therefore, the starting position of the listening period corresponding to the monitor occasion is calculated by defining a corresponding offset for each monitor occasion. In step 802, it also includes the following steps.

In S 1, a first moment is determined based on the first duration and the starting position of the paging occasion (PO), where the first moment is a starting position of the listening period.

In S2, fourth information is obtained according to a protocol, or the fourth information sent by the network device is received; where the fourth information is used to indicate offsets corresponding to M monitor occasions in the paging occasion (PO), and the offset is an offset of the starting position of the listening period corresponding to the monitor occasion relative to the first moment, and the listening period corresponding to the monitor occasion is used to listen to the wake up signal corresponding to the monitor occasion; where M is the number of beams corresponding to the paging occasion (PO).

In S3, based on the offset and the first moment, the starting position of the listening period corresponding to the monitor occasion is determined.

In a possible implementation, the starting position of the paging occasion (PO) is the same as the starting position of the first monitor occasion (PO), and it may be determined that the offset corresponding to the first monitor occasion is 0.

In an example:

a total of 4 MOs corresponding to 4 SSB beams are included in one paging occasion (PO). The first duration from the starting position of the PO to the starting position time of the listening period corresponding to the PO is t0 (for example, t0=1000ms). If the starting moment of the PO is time t1, then the starting position of the listening period corresponding to the PO is t2=t1-t0.

The starting moment of the PO is the starting moment of the first monitor occasion.

For the second, third, and fourth monitor occasions (MOs), the values of the offset are configured to be 1 slot, 2 slots, and 3 slots, respectively. Then:

> the starting position of the listening period corresponding to the second monitor occasion (MO) is t2+1 slot;
> the starting position of the listening period corresponding to the third monitor occasion (MO) is t2+2 slots;

the starting position of the listening period corresponding to the fourth monitor occasion (MO) is t2+3 slots.

As shown in FIG. 9, the second, third, and fourth monitor occasions (Mos) are respectively configured with offset values of 1 slot, 2 slots, and 3 slots.

In this implementation, by setting the offset corresponding to each monitor occasion within the same paging occasion (PO), the UE covered by different beams can accurately receive the wake up signal of the corresponding monitor occasion (MO).

In some possible implementations, the starting position of the listening period corresponding to the monitor occasion is calculated by defining a fixed offset for two adjacent monitor occasions, and step S802 also includes the following steps.

In S 1', a first moment is determined based on the first duration and the starting position of the paging occasion (PO), where the first moment is the starting position of the listening period.

In S2', fifth information is obtained according to a protocol, or fifth information sent by the network device is received; where the fifth information is used to indicate a first step length, and the first step length is an offset of the third moment relative to the second moment. The third moment is a starting moment of a listening period corresponding to a latter monitor occasion (MO) in two adjacent monitor occasions (MOs), and the second moment is a starting moment of a listening period corresponding to a previous monitor occasion (MO) in the two adjacent monitor occasions (MOs).

In S3', based on the first moment and the first step length, the starting position of the listening period corresponding to each monitor occasion in the paging occasion (PO) is determined.

In this implementation, a fixed first step length is set, and the gap between the starting moments of the listening periods corresponding to every two adjacent monitor occasions in the same paging occasion (PO) is the same by default, so that the UE can accurately receive the wake up signal of the corresponding monitor occasion (MO) In the case of saving the transmission message content.

In some possible implementations, the first length may be longer than a duration of the wake up signal.

In an example:
a total of 4 MOs corresponding to 4 SSB beams are included in 1 paging occasion (PO). The first duration between the starting position of the PO and the starting position time of the listening period corresponding to the PO is t0 (for example, t0=1000ms). If the starting moment of the PO is time t1, then the starting position of the listening period corresponding to the PO is t2=t1-t0.

The starting moment of the PO is a starting moment of the first monitor occasion.

If the first step length is determined to be 1 slot, then it can be known that the gap between the starting positions of the listening periods corresponding to two adjacent monitor occasion (MO) is 1 slot, then:

the starting position of the listening period corresponding to the second monitor occasion (MO) is t2+1 slot;
the starting position of the listening period corresponding to the third monitor occasion (MO) is t2+2 slots;
the starting position of the listening period corresponding to the fourth monitor occasion (MO) is t2+3 slots.

In the embodiment of the present disclosure, by setting the first duration corresponding to the paging occasion (PO), the user equipment can determine the starting position of the listening period corresponding to the paging occasion (PO) based on the first duration, so that the wake up signal can be accurately listened to prevent the power loss due to incorrectly determining the starting position of the listening period.

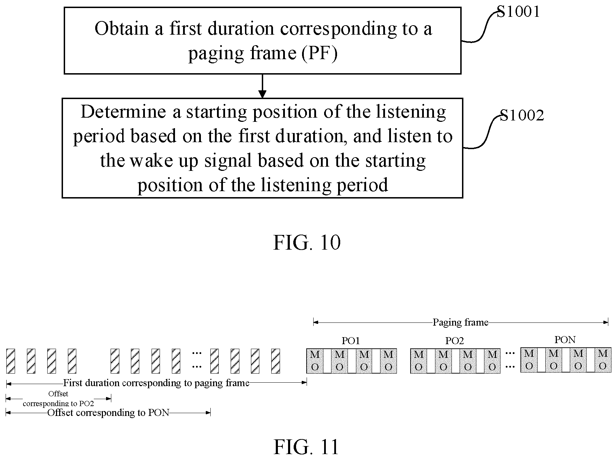

An embodiment of the present disclosure provides a method for listening to a wake up signal, and the method is executed by a user equipment. The method may be executed independently, or may be executed in combination with any other embodiment in the embodiments of the present disclosure. FIG. 10 is a flowchart of listening to a wake up signal according to an exemplary embodiment. As shown in FIG. 10, the method includes the following steps.

In step S1001, a first duration corresponding to a paging frame (PF) is obtained.

The first duration corresponding to the paging frame (PF) is a gap from a starting position of the paging frame (PF) to a starting position of a listening period corresponding to the paging frame (PF), and the listening period is used for listening to a wake up signal corresponding to the paging frame (PF).

In an implementation of the present application, the user equipment obtaining the first duration corresponding to the paging frame (PF) includes one of the following:

obtaining according to a protocol, and
receiving first information for indicating the first duration corresponding to the paging frame (PF) sent by the network device.

In an example, as shown in FIG. 11, one paging frame includes N paging occasions, and the first duration corresponding to the paging frame is determined.

In an implementation of the present application, the first duration may be defined as a gap, and may also be one of the following:

an absolute time value,
a value in a unit of a first time domain unit,

consisting of a frame-level gap and a symbol-level gap.

In step S1002, a starting position of the listening period is determined based on the first duration, and the wake up signal is listened based on the starting position of the listening period.

In some possible implementations, step S1002 also includes the following steps.

In step S-1, a fourth moment is determined based on the first duration and the starting position of the paging frame (PF), where the fourth moment is the starting position of the listening period.

In step S-2, sixth information is obtained according to a protocol, or the sixth information sent by a network device is received; where the sixth information is used to indicate an offset corresponding to each paging occasion (PO) corresponding to the paging frame (PF). The offset is an offset of the starting position of the listening period corresponding to the paging occasion (PO) relative to the fourth moment, and the listening period corresponding to the paging occasion (PO) is used to listen to the wake up signal corresponding to the paging occasion (PO).

In step S-3, based on the fourth moment and the offset, the starting position of the listening period corresponding to the paging occasion corresponding to the paging frame (PF) is determined.

In a possible implementation, the starting position of the paging frame (PF) is the same as the starting position of the first paging occasion, and it may be determined that the offset corresponding to the first paging occasion is 0.

In an example, as shown in FIG. 11, one paging frame includes N paging occasions, the first duration corresponding to the paging frame is determined, the second moment is the starting position of the listening period corresponding to the paging frame (PF), and the offset corresponding to each paging occasion (PO) is determined.

In this implementation, setting the offset corresponding to each paging occasion (PO) in the same paging frame (PF) can accurately determine the starting position of the monitor occasion (MO) corresponding to each paging occasion (PO).

In some possible implementations, step S1002 also includes the following steps.

In step S-1', a fourth moment is determined based on the first duration and the starting position of the paging frame (PF), where the fourth moment is a starting position of the listening period.

In step S-2', seventh information is obtained according to a protocol, or the seventh information sent by the network device is received; where the seventh information is used to indicate a second step length, the second step length is an offset of the sixth moment relative to the fifth moment, the sixth moment is the starting moment of the listening period corresponding to the latter paging occasion (PO) in two adjacent paging occasions (POs), and the fifth moment is the starting moment of the listening period corresponding to the previous paging occasion (PO) in the two adjacent paging occasions (POs).

In step S-3', based on the fourth moment and the second step, the starting position of the listening period corresponding to the paging occasion corresponding to the paging frame (PF) is determined.

In this implementation, a fixed second step length is set, and the gaps between the starting moments of the listening periods corresponding to every two adjacent paging occasions (Pos) in the same paging frame (PF) are the same by default, so that the UE can accurately receive the wake up signal of the corresponding paging occasion (PO) in the case of saving the transmission message content.

In some possible implementations, the second step length is greater than or equal to a first product, where the first product is a product of the number of synchronization signal blocks and a duration of a wake up signal.

In some possible implementations, on the basis of S-1 to S-3, or on the basis of S-1' to S-3', the method also includes the following steps.

In step S-3, eighth information is obtained according to a protocol, or the eighth information sent by the network device is received; where the eighth information is used to indicate offsets corresponding to N monitor occasions in the paging occasion (PO), where the offset is an offset of the starting position of the listening period corresponding to the monitor occasion relative to the starting position of the listening period corresponding to the paging occasion, and the listening period corresponding to the paging occasion (PO) is used for listening to a wake up signal corresponding to the paging occasion (PO), where N is the number of beams corresponding to the paging occasion (PO).

In step S-4, based on the offset and the starting position of the listening period corresponding to the paging occasion, the starting position of the listening period corresponding to the monitor occasion is determined.

In some possible implementations, on the basis of S-1 to S-3, or on the basis of S-1' to S-3', the method also includes the following steps.

In step S-3', ninth information is obtained according to a protocol, or the ninth information sent by the network device is received, where the ninth information is used to indicate a third step length, and the third step length is an offset of an eighth moment relative to a seventh moment, where the eighth moment is a starting moment of a listening period corresponding to the latter monitor occasion (MO) in two adjacent monitor occasions (MOs), and the seventh moment is a starting moment of a listening period corresponding to the previous monitor occasion (MO) in the two adjacent monitor occasions (MOs).

In step S-4', based on the third step length and the starting position of the listening period corresponding to the paging occasion, the starting position of the listening period corresponding to the monitor occasion is determined.

In some possible implementations, the wake up signal corresponding to the paging frame (PF) includes an identifier of the paging frame (PF); the wake up signal corresponding to the paging occasion (PO) includes an identifier of the paging occasion (PO). Therefore, if the listening periods corresponding to two paging occasions (POs) overlap, the UE can distinguish whether the received wake up signal corresponds to the paging occasion (PO) corresponding to this UE.

Based on the same concept as the above method embodiments, the embodiment of the present application also provides a communication apparatus, which can have the functions of the user equipment 102 in the above method embodiments, and can be used to implement the steps performed by the user equipment 102 provided by the above method embodiments. The functions can be implemented by hardware, and can also be implemented by software or hardware executing the corresponding software. The hardware or software includes one or more modules corresponding to the above functions.

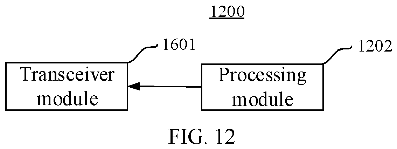

In a possible implementation, the communication apparatus 1200 shown in FIG. 12 may serve as the user equipment involved in the foregoing method embodiments, and execute the steps performed by the user equipment in the foregoing method embodiments. As shown in FIG. 12, the communication apparatus 1200 may include a transceiver module 1201 and a processing module 1202, and the transceiver module 1201 and the processing module 1202 are coupled to each other. The transceiver module 1201 can be used to support the communication apparatus 1200 to communicate, and the transceiver module 1201 can have a wireless communication function, for example, it can perform wireless communication with other communication apparatus through a wireless air interface. The processing module 1202 can be used to support the communication apparatus 1200 to perform the processing actions in the above method embodiments, including but not limited to: generating information and messages sent by the transceiver module 1201, and/or demodulating and decoding signals received by the transceiver module 1201, and so on.

When executing the steps implemented by the user equipment 102, the processing module 1402 is configured to obtain first information, where the first information is used to determine a first duration corresponding to a time domain range; where the first duration is a first gap from a starting position of the time domain range to a starting position of a listening period corresponding to the time domain range, the listening period is used to listen to a wake up signal corresponding to the time domain range; the processing module 1402 is further configured to determine a starting position of the listening period based on the first duration; and the processing module 1402 is further configured to listen to the wake up signal based on the starting position of the listening period.

In a possible implementation, the transceiver module 1201 is configured to obtain the first information according to a protocol.

In a possible implementation, the transceiver module 1201 is configured to receive the first information sent by a network device.

In a possible implementation, the time domain range is a monitor occasion (MO) in a paging occasion (PO).

In a possible implementation, the first information is used to indicate the first duration.

In a possible implementation, the first information includes second information and third information, the second information is used to indicate a second gap from the starting position of the time domain range to an end position of the listening period corresponding to the time domain range, and the third information is used to indicate a duration of the listening period.

In a possible implementation, one synchronization information block beam corresponds to more than one monitor occasion (MO) in one PO, and the time domain range is the first monitor occasion in the more than one monitor occasion (MO).

In a possible implementation, the first duration is an absolute time value, or,

> the first duration is a numerical value in a unit of a first time domain unit, or,
> the first duration consists of a frame-level gap and a symbol-level gap.

In a possible implementation, the time domain range is a paging occasion (PO).

In a possible implementation, the processing module 1202 is configured to determine a first moment based on the first duration and the starting position of the paging occasion (PO), where the first moment is a starting position of the listening period.

In a possible implementation, the processing module 1202 is configured to obtain fourth information according to a protocol, where the fourth information is used to indicate offsets corresponding to M monitor occasions in the paging occasion (PO), and the offset is an offset of the starting position of the listening period corresponding to the monitor occasion relative to the first moment, and the listening period corresponding to the monitor occasion is used to listen to the wake up signal corresponding to the monitor occasion; where M is the number of beams corresponding to the paging occasion (PO); and the processing module 1202 is further configured to determine the starting position of the listening period corresponding to the monitor occasion based on the offset and the first moment.

In a possible implementation, the transceiver module 1201 is configured to receive fourth information sent by the network device, where the fourth information is used to indicate offsets corresponding to M monitor occasions in the paging occasion (PO), the offset is an offset of the starting position of the listening period corresponding to the monitor occasion relative to the first moment, and the listening period corresponding to the monitor occasion is used to listen to the wake up signal corresponding to the monitor occasion; where M is the number of beams corresponding to the paging occasion (PO);

the processing module 1202 is configured to obtain the fourth information according to the protocol, and is further configured to determine the starting position of the listening period corresponding to the monitor occasion based on the offset and the first moment.

In a possible implementation, the processing module 1202 is configured to obtain fifth information according to a protocol, where the fifth information is used to indicate a first step length, the first step length is an offset of a third moment relative to a second moment, the third moment is a starting moment of a listening period corresponding to the latter monitor occasion (MO) in two adjacent monitor occasions (MOs), and the second moment is a starting moment of a listening period corresponding to the previous monitor occasion (MO) in the two adjacent monitor occasions (MOs); and the processing module 1202 is further configured to determine the starting position of the listening period corresponding to each monitor occasion in the paging occasion (PO) based on the first moment and the first step length.

In a possible implementation, the transceiver module 1201 is configured to receive fifth information sent by the network device; where the fifth information is used to indicate a first step length, the first step length is an offset of a third moment relative to a second moment, the third moment is a starting moment of a listening period corresponding to the latter monitor occasion (MO) in two adjacent monitor occasions (MOs), and the second moment is a starting moment of a listening period corresponding to the previous monitor occasion (MO) in the two adjacent monitor occasions (MOs);

the processing module 1202 is configured to determine the starting position of the listening period corresponding to each monitor occasion in the paging occasion (PO) based on the first moment and the first step length.

In a possible implementation, the first step length is longer than a duration of the wake up signal.

In a possible implementation, one synchronization information block beam corresponds to more than one monitor occasion (MO) in one PO, and M monitor occasions in the paging occasion (PO) include the first monitor occasion in one PO corresponding to each synchronization information block beam.

In a possible implementation, the time domain range is a paging frame (PF).

In a possible implementation, the processing module 1202 is configured to determine a fourth moment based on the first duration and the starting position of the paging frame (PF), where the fourth moment is the starting position of the listening period.

In a possible implementation, the processing module 1202 is configured to obtain sixth information according to a protocol, where the sixth information is used to indicate an offset corresponding to each paging occasion (PO) corresponding to the paging frame (PF), the offset is an offset of the starting position of the listening period corresponding to the paging occasion (PO) relative to the fourth moment, and the listening period corresponding to the paging occasion (PO) is used to listen to the wake up signal corresponding to the paging occasion (PO); and the processing module 1202 is further configured to determine the starting position of the listening period corresponding to the paging occasion corresponding to the paging frame (PF) based on the fourth moment and the offset.

In a possible implementation, the transceiver module 1201 is configured to receive sixth information sent by the network device; where the sixth information is used to indicate an offset corresponding to each paging occasion (PO) corresponding to the paging frame (PF), the offset is an offset of the starting position of the listening period corresponding to the paging occasion (PO) relative to the fourth moment, and the listening period corresponding to the paging occasion (PO) is used to listen to the wake up signal corresponding to the paging occasion (PO);

the processing module 1402 is configured to determine the starting position of the listening period corresponding to the paging occasion corresponding to the paging frame (PF) based on the fourth moment and the offset.

In a possible implementation, the processing module 1202 is configured to obtain seventh information according to a protocol, where the seventh information is used to indicate a second step length, and the second step length is an offset of the sixth moment relative to the fifth moment, the sixth moment is a starting moment of a listening period corresponding to a latter paging occasion (PO) in two adjacent paging occasions (POs), and the fifth moment is a starting moment of a listening period corresponding to a previous paging occasion (PO) in the two paging occasions (POs); and the processing module 1202 if further configured to determine the starting position of the listening period corresponding to the paging occasion corresponding to the paging frame (PF) based on the fourth moment and the second step length.

In a possible implementation, the transceiver module 1201 is configured to receive seventh information sent by the network device;

the processing module 1202 is configured to determine the starting position of the listening period corresponding to the paging occasion corresponding to the paging frame (PF) based on the fourth moment and the second step length.

In a possible implementation, the second step length is greater than or equal to a first product, where the first product is a product of the number of synchronization signal blocks and a duration of a wake up signal.

In a possible implementation, the processing module 1202 is configured to obtain eighth information according to a protocol, where the eighth information is used to indicate offsets corresponding to N monitor occasions in the paging occasion (PO), where the offset is an offset of the starting position of the listening period corresponding to the monitor occasion relative to the starting position of the listening period corresponding to the paging occasion, and the listening period corresponding to the paging occasion (PO) is used for listening to a wake up signal corresponding to the paging occasion (PO), where N is the number of beams corresponding to the paging occasion (PO); the processing module 1202 is further configured to determine the starting position of the listening period corresponding to the monitor occasion based on the offset and the starting position of the listening period corresponding to the paging occasion.

In a possible implementation, the transceiver module 1201 is configured to receive eighth information sent by the network device; where the eighth information is used to indicate offsets corresponding to N monitor occasions in the paging occasion (PO), where the offset is an offset of the starting position of the listening period corresponding to the monitor occasion relative to the starting position of the listening period corresponding to the paging occasion, and the listening period corresponding to the paging occasion (PO) is used for listening to the wake up signal corresponding to the paging occasion (PO), where N is the number of beams corresponding to the paging occasion (PO); the processing module 1202 is configured to determine the starting position of the listening period corresponding to the monitor occasion based on the offset and the starting position of the listening period corresponding to the paging occasion.

In a possible implementation, the processing module 1202 is configured to obtain ninth information according to a protocol, where the ninth information is used to indicate a third step length, and the third step length is an offset of an eighth moment relative to a seventh moment, where the eighth moment is a starting moment of a listening period corresponding to a latter monitor occasion (MO) in two adjacent monitor occasions (MOs), and the seventh moment is a starting moment of a listening period corresponding to a previous monitor occasion (MO) in the two adjacent monitor occasions (MOs); and the processing module 1202 is further configured to determine the starting position of the listening period corresponding to the monitor occasion based on the third step length and the starting position of the listening period corresponding to the paging occasion.

In a possible implementation, the transceiver module 1201 is configured to receive ninth information sent by the network device; where the ninth information is used to indicate the third step length, and the third step length is an offset of the eighth moment relative to the seventh moment, where the eighth moment is the starting moment of the listening period corresponding to the latter monitor occasion (MO) in the two adjacent monitor occasion (MO), and the seventh moment is the starting moment of the listening period corresponding to the previous monitor occasion (MO) in the two adjacent monitor occasion (MO); and the processing module 1202 is configured to determine the listening period corresponding to the monitor occasion based on the third step length and the starting position of the listening period corresponding to the paging occasion.

In a possible implementation, the wake up signal corresponding to the paging frame (PF) includes an identifier of the paging frame (PF).

In a possible implementation, the wake up signal corresponding to the paging occasion (PO) includes an identifier of the paging occasion (PO).

In a possible implementation, the frequency domain position of the wake up signal is one of the following:

being the same as a frequency domain position of a synchronization signal block;
being the same as a frequency domain position of a resource set CORESET#0;
being the same as a frequency domain position of an initial bandwidth part.

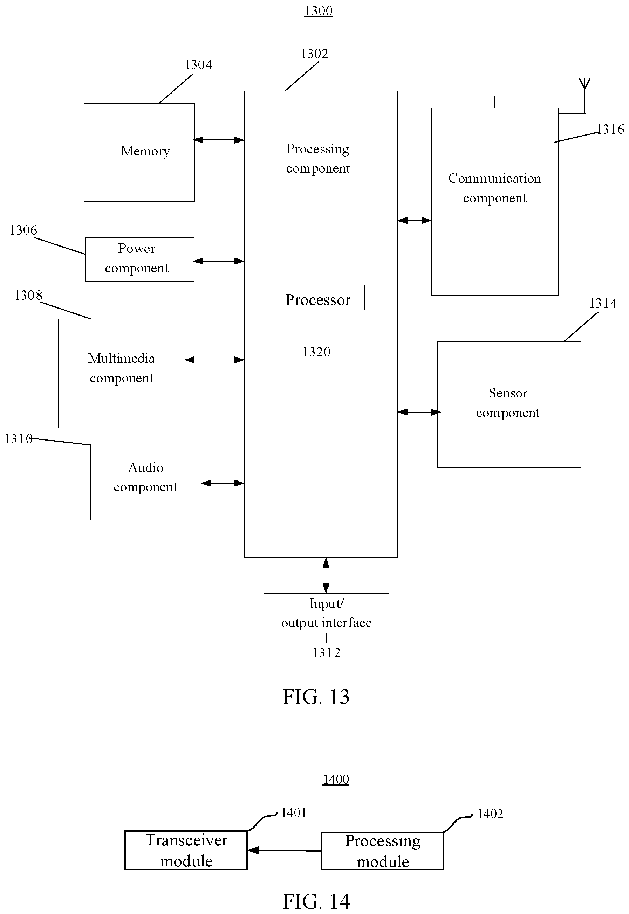

When the communication apparatus is the user equipment 102, its structure may also be as shown in FIG. 13.

Referring to FIG. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or part of the steps of the above described methods. Moreover, the processing component 1302 may include one or more modules that facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation at the apparatus 1300. Examples of such data include instructions for any applications or methods operated on the apparatus 1300, contact data, phonebook data, messages, pictures, video, etc. The memory 1304 may be implemented using any type of volatile or non-volatile memory devices or a combination thereof, such as a static random access memory (SRAM), an electrically erasable programmable read-only memory (EEPROM), an erasable programmable read only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera can receive external multimedia data while the apparatus 1300 is in an operation mode, such as a photographing mode or a video mode. Each of the front camera and the rear camera can be a fixed optical lens system or have focus and optical zoom capability.

The audio component 1310 is configured to output and/or input audio signals. For example, the audio component 1310 includes a microphone ("MIC") configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor assembly 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an acceleration sensor, a gyroscope sensor, a magnetic sensor, a pressure sensor or a temperature sensor.

The communication component 1316 is configured to facilitate communication, wired or wirelessly, between the apparatus 1300 and other devices. The apparatus 1300 can access a wireless network based on a communication standard, such as WiFi, 4G, or 5G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is also provided a non-transitory computer-readable storage medium including instructions, such as included in the memory 1304, executable by the processor 1320 in the apparatus 1300, for performing the above-described methods. For example, the non-transitory computer readable storage medium may be a ROM, a random access memory (RAM), a CD-ROM, a magnetic tape, a floppy disc, an optical data storage device, and the like.

Based on the same concept as the above method embodiments, the embodiment of the present application also provides a communication apparatus, which can have the functions of the network device 101 in the above method embodiments, and can be used to implement the steps performed by the network device 101 provided by the above method embodiments. The functions can be implemented by hardware, and can also be implemented by software or hardware executing the corresponding software. The hardware or software includes one or more modules corresponding to the above functions.

In a possible implementation, the communication apparatus 1400 shown in FIG. 14 may serve as the network device involved in the foregoing method embodiments, and execute the steps performed by the network device 101 in the foregoing method embodiments. As shown in FIG. 14, the communication apparatus 1400 may include a transceiver module 1401 and a processing module 1402. The transceiver module 1401 can be used to support the communication apparatus 1400 to communicate, and the transceiver module 1401 can have a wireless communication function, for example, it can perform wireless communication with other communication apparatuses through a wireless air interface. The processing module 1402 can be used to support the communication apparatus 1400 to perform the processing actions in the above method embodiments, including but not limited to: generating information and messages sent by the transceiver module 1401, and/or demodulating and decoding signals received by the transceiver module 1401, and so on.

When executing the steps implemented by the network device 101, the transceiver module 1401 is configured to send first information to the user equipment; where the first information is used to determine a first duration corresponding to a time domain range, and the first duration is a first gap from a starting position of the time domain range to a starting position of a listening period corresponding to the time domain range, and the listening period is used to listen to the wake up signal corresponding to the time domain range; and the transceiver module 1401 is further configured to send a wake up signal.

In a possible implementation, the time domain range is a monitor occasion (MO) in a paging occasion (PO).

In a possible implementation, the first information is used to indicate the first duration.

In a possible implementation, the first information includes second information and third information, the second information is used to indicate a second gap from a starting position of the time domain range to an end position of the listening period corresponding to the time domain range, and the third information is used to indicate a duration of the listening period.

In a possible implementation, one synchronization information block beam corresponds to more than one monitor occasion (MO) in one PO, and the time domain range is the first monitor occasion in the more than one monitor occasion (MO).

In a possible implementation, the first duration is an absolute time value, or,

> the first duration is a value in a unit of a first time domain unit, or,
> the first duration consists of a frame-level gap and a symbol-level gap.

In a possible implementation, the time domain range is a paging occasion (PO).

In a possible implementation, the transceiver module 1401 is configured to send fourth information to the user equipment; where the fourth information is used to indicate offsets corresponding to M monitor occasions in the paging occasion (PO), the offset is an offset of a starting position of a listening period corresponding to the monitor occasion relative to the first moment, and the listening period corresponding to the monitor occasion is used to listen to a wake up signal corresponding to the monitor occasion; where M is the number of beams corresponding to the paging occasion (PO), and the first moment is the starting position of the listening period.

In a possible implementation, the transceiver module 1401 is configured to send fifth information to the user equipment; where the fifth information is used to indicate a first step length, and the first step length is an offset of a third moment relative to a second moment, the third moment is a starting moment of the listening period corresponding to the latter monitor occasion (MO) in two adjacent monitor occasions (MOs), and the second moment is the starting moment of the listening period corresponding to the previous monitor occasion (MO) in the two adjacent monitor occasions (MOs).

In a possible implementation, the first step length is longer than a duration of the wake up signal.

In a possible implementation, one synchronization information block beam corresponds to more than one monitor occasion (MO) in one PO, and M monitor occasions in the paging occasion (PO) include the first monitor occasion in one PO corresponding to each synchronization information block beam.

In a possible implementation, the time domain range is a paging frame (PF).

In a possible implementation, the transceiver module 1401 is configured to send sixth information to the user equipment; sixth information; where the sixth information is used to indicate an offset corresponding to each paging occasion (PO) corresponding to the paging frame (PF), where the offset is an offset of the starting position of the listening period corresponding to the paging occasion (PO) relative to a fourth moment, and the listening period corresponding to the paging occasion (PO) is used for listening to a wake up signal corresponding to the paging occasion (PO); the fourth moment is the starting position of the listening period.

In a possible implementation, the transceiver module 1401 is configured to send seventh information to the user equipment; where the seventh information is used to indicate a second step length, and the second step length is an offset of the sixth moment relative to the fifth moment, the sixth moment is the starting moment of the listening period corresponding to the latter paging occasion (PO) in the two adjacent paging occasions (POs), and the fifth moment is the starting moment of the listening period corresponding to the previous paging occasion (PO) in the two adjacent paging occasions (POs).

In a possible implementation, the second step length is greater than or equal to a first product, where the first product is a product of the number of synchronization signal blocks and a duration of a wake up signal.

In a possible implementation, the transceiver module 1401 is configured to send eighth information to the user equipment; where the eighth information is used to indicate offset corresponding to N monitor occasions in the paging occasion (PO), where the offset is an offset of the starting position of the listening period corresponding to the monitor occasion relative to the starting position of the listening period corresponding to the paging occasion, and the listening period corresponding to the paging occasion (PO) is used to listen to a wake up signal corresponding to the paging occasion (PO), where N is the number of beams corresponding to the paging occasion (PO).

In a possible implementation, the transceiver module 1401 is configured to send ninth information to the user equipment, where the ninth information is used to indicate a third step length, and the third step length is an offset of the eighth moment relative to the seventh moment, where the eighth moment is the starting moment of the listening period corresponding to the latter monitor occasion (MO) in the two adjacent monitor occasions (MOs), and the seventh moment is the starting moment of the listening period corresponding to the previous monitor occasion (MO) in the two adjacent monitor occasions (MOs).

In a possible implementation, the wake up signal corresponding to the paging frame (PF) includes an identifier of the paging frame (PF).

In a possible implementation, the wake up signal corresponding to the paging occasion (PO) includes an identifier of the paging occasion (PO).

In a possible implementation, a frequency domain position of the wake up signal is one of the following:

    being the same as a frequency domain position of a synchronization signal block;
    being the same as a frequency domain position of a resource set CORESET#0;
    being the same as a frequency domain position of an initial bandwidth part.

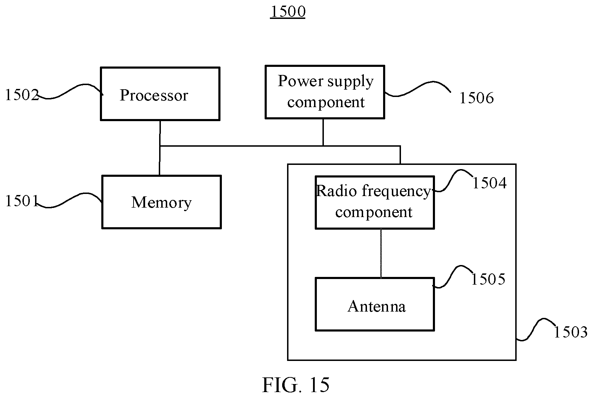

When the communication apparatus is a network device, its structure may also be as shown in FIG. 15. The structure of the communication apparatus is described by taking the network device 101 as a base station as an example. As shown in FIG. 15, the apparatus 1500 includes a memory 1501, a processor 1502, a transceiver component 1503, and a power supply component 1506. The memory 1501 is coupled with the processor 1502, and can be used to save programs and data necessary for the communication apparatus 1500 to realize various functions. The processor 1502 is configured to support the communication apparatus 1500 to execute corresponding functions in the above methods, and the functions can be realized by calling a program stored in the memory 1501. The transceiver component 1503 can be a wireless transceiver, and can be used to support the communication apparatus 1500 to receive signaling and/or data and send signaling and/or data through a wireless air interface. The transceiver component 1503 may also be called a transceiver unit or a communication unit, and the transceiver component 1503 may include a radio frequency component 1504 and one or more antennas 1505, where the radio frequency component 1504 may be a remote radio unit (RRU), specifically it can be used for the transmission of radio frequency signals and the conversion of radio frequency signals and baseband signals, and the one or more antennas 1505 can be specifically used for radiating and receiving radio frequency signals.

When the communication apparatus 1500 needs to send data, the processor 1502 can perform baseband processing on the data to be sent, and output the baseband signal to the radio frequency unit, and the radio frequency unit performs radio frequency processing on the baseband signal, and sends the radio frequency signal through the antenna in the form of electromagnetic waves. When data is sent to the communication apparatus 1500, the radio frequency unit receives the radio frequency signal through the antenna, converts the radio frequency signal into a baseband signal, and outputs the baseband signal to the processor 1502, and the processor 1502 converts the baseband signal into data and processes the data.

Other implementations of the embodiments of the present disclosure will be readily apparent to those skilled in the art from consideration of the specification and practice of the contents disclosed herein. This application is intended to cover any modification, use or adaptation of the embodiments of the present disclosure. These modifications, uses or adaptations follow the general principles of the embodiments of the present disclosure and include common knowledge or customary technical means in the technical field not disclosed in the present disclosure. It is intended that the specification and embodiments are considered to be exemplary only, with a true scope and spirit of the embodiments of the present disclosure being indicated by the appending claims.

It should be understood that the embodiments of the present disclosure are not limited to the precise structures that have been described above and shown in the accompanying drawings, and various modifications and changes may be made without departing from the scope thereof. The scope of the embodiments of the present disclosure is limited only by the appended claims.

Industrial Applicability

By setting the first duration corresponding to the time domain range, the user equipment can determine the starting position of the listening period based on the first duration corresponding to the time domain range, so that the wake up signal can be accurately listened, and the power loss due to determining a wrong starting position of the listening period is prevented.

**Claims**

1. A method for listening to a wake up signal, performed by a user equipment, wherein the method comprises:

    obtaining first information, wherein the first information is used to determine a first duration corresponding to a time domain range; wherein the first duration is a first gap from a starting position of the time domain range to a starting position of a listening period corresponding to the time domain range, and the listening period is used to listen to a wake up signal corresponding to the time domain range;
    determining the starting position of the listening period based on the first duration; and
    listening to the wake up signal based on the starting position of the listening period.

2. The method according to claim 2, wherein obtaining the first information comprises:
   obtaining the first information according to a protocol.

3. The method according to claim 2, wherein obtaining first information comprises:
   receiving the first information sent by a network device.

4. The method according to any one of claims 1 to 3, wherein the time domain range is a monitor occasion (MO) in a paging occasion (PO).

5. The method according to claim 4, wherein the first information is used to indicate the first duration.

6. The method according to claim 4, wherein the first information comprises second information and third information, the second information is used to indicate a second gap from the starting position of the time domain range to an end position of the listening period corresponding to the time domain range, and the third information is used to indicate a duration of the listening period.

7. The method according to claim 4, wherein one synchronization information block beam corresponds to more than one monitor occasion (MO) in one PO, and the time domain range is a first monitor occasion in the more than one monitor occasion (MO).

8. The method according to claim 4, wherein

    the first duration is an absolute time value, or,
    the first duration is a value in a unit of a first time domain unit, or,
    the first duration consists of a frame-level gap and a symbol-level gap.

9. The method according to any one of claims 1 to 3, wherein
   the time domain range is a paging occasion (PO).

10. The method according to claim 9, wherein determining the starting position of the listening period based on the first duration comprises:
    determining a first moment based on the first duration and a starting position of the paging occasion (PO), wherein the first moment is the starting position of the listening period.

11. The method according to claim 10, further comprising:

    obtaining fourth information according to a protocol, or receiving the fourth information sent by a network device; wherein the fourth information is used to indicate offsets corresponding to M monitor occasions in the paging occasion (PO), the offset is an offset of the starting position of the listening period corresponding to the monitoring occasion relative to the first moment, and the listening period corresponding to the monitor occasion is used to listen to the wake up signal corresponding to the monitor occasion; wherein M is a number of beams corresponding to the paging occasion (PO);
    determining the starting position of the listening period corresponding to the monitor occasion based on the offset and the first moment.

12. The method according to claim 10, further comprising:

    obtaining fifth information according to a protocol, or receiving the fifth information sent by a network device; wherein the fifth information is used to indicate a first step length, and the first step length is an offset of a third moment relative to a second moment, the third moment is a starting moment of a listening period corresponding to a latter monitor occasion (MO) in two adjacent monitor occasions (MOs), and the second moment is a starting moment of a listening period corresponding to a previous monitor occasion (MO) in the two adjacent monitor occasions (MOs);
determining the starting position of the listening period corresponding to each monitor occasion in the paging occasion (PO) based on the first moment and the first step length.

13. The method according to claim 12, wherein
the first step length is longer than a duration of the wake up signal.

14. The method according to any one of claims 9 to 13, wherein
one synchronization information block beam corresponds to more than one monitor occasion (MO) in one PO, and M monitor occasions in the paging occasion (PO) comprise a first monitor occasion in one PO corresponding to each synchronization information block beam.

15. The method according to any one of claims 1 to 3, wherein
the time domain range is a paging frame (PF).

16. The method according to claim 15, further comprising:
determining the starting position of the listening period based on the first duration comprises:
determining a fourth moment based on the first duration and a starting position of the paging frame (PF), wherein the fourth moment is the starting position of the listening period.

17. The method according to claim 16, further comprising:

obtaining sixth information according to a protocol, or receiving the sixth information sent by a network device; wherein the sixth information is used to indicate an offset corresponding to each paging occasion (PO) corresponding to the paging frame (PF), the offset is an offset of the starting position of the listening period corresponding to the paging occasion (PO) relative to the fourth moment, and the listening period corresponding to the paging occasion (PO) is used to listen to the wake up signal corresponding to the paging occasion (PO);
determining the starting position of the listening period corresponding to the paging occasion corresponding to the paging frame (PF) based on the fourth moment and the offset.

18. The method according to claim 16, further comprising:

obtaining seventh information according to a protocol, or receiving the seventh information sent by a network device; wherein the seventh information is used to indicate a second step length, and the second step length is an offset of a sixth moment relative to a fifth moment, the sixth moment is a starting moment of a listening period corresponding to a latter paging occasion (PO) in two adjacent paging occasions (POs), and the fifth moment is a starting moment of a listening period corresponding to a previous paging occasion (PO) in the two adjacent paging occasions (POs);
determining the starting position of the listening period corresponding to the paging occasion corresponding to the paging frame (PF) based on the fourth moment and the second step length.

19. The method according to claim 18, wherein
the second step length is greater than or equal to a first product, wherein the first product is a product of a number of synchronization signal blocks and a duration of a wake up signal.

20. The method according to claim 17 or 19, further comprising:

obtaining eighth information according to a protocol, or receiving the eighth information sent by a network device; wherein the eighth information is used to indicate offsets corresponding to N monitor occasions in the paging occasion (PO), wherein the offset is an offset of the starting position of the listening period corresponding to the monitor occasion relative to the starting position of the listening period corresponding to the paging occasion, and the listening period corresponding to the paging occasion (PO) is used to listen to a wake up signal corresponding to the paging occasion (PO), wherein N is a number of beams corresponding to the paging occasion (PO);
determining the starting position of the listening period corresponding to the monitor occasion based on the offset and the starting position of the listening period corresponding to the paging occasion.

21. The method according to claim 17 or 19, further comprising:

obtaining ninth information according to a protocol, or receiving the ninth information sent by a network device, wherein the ninth information is used to indicate a third step length, and the third step length is an offset of an eighth moment relative to a seventh moment, wherein the eighth moment is a starting moment of a listening period corresponding to a latter monitor occasion (MO) in two adjacent monitor occasions (MOs), and the seventh moment is a starting moment of a listening period corresponding to a previous monitor occasion (MO) in the two adjacent monitor occasions (MOs);

determining the starting position of the listening period corresponding to the monitor occasion based on the third step length and the starting position of the listening period corresponding to the paging occasion.

22. The method according to any one of claims 15 to 21, wherein

a wake up signal corresponding to the paging frame (PF) comprises an identifier of the paging frame (PF).

23. The method according to any one of claims 9 to 21, wherein

a wake up signal corresponding to the paging occasion (PO) comprises an identifier of the paging occasion (PO).

24. The method according to any one of claims 1 to 23, wherein

a frequency domain position of the wake up signal is one of following:

being the same as a frequency domain position of a synchronization signal block;
being the same as a frequency domain position of a resource set CORESET#0;
being the same as a frequency domain position of an initial bandwidth part.

25. A method for sending a wake up signal, performed by a network device, wherein the method comprises:

sending first information to a user equipment; wherein the first information is used to determine a first duration corresponding to a time domain range, the first duration is a first gap from a starting position of the time domain range to a starting position of a listening period corresponding to the time domain range, and the listening period is used to listen to a wake up signal corresponding to the time domain range; and
sending a wake up signal.

26. The method according to claim 25, wherein the time domain range is a monitor occasion (MO) in a paging occasion (PO).

27. The method according to claim 26, wherein the first information is used to indicate the first duration.

28. The method according to claim 26, wherein the first information comprises second information and third information, the second information is used to indicate a second gap from the starting position of the time domain range to an end position of the listening period corresponding to the time domain range, and the third information is used to indicate a duration of the listening period.

29. The method according to claim 26, wherein one synchronization information block beam corresponds to more than one monitor occasion (MO) in one PO, and the time domain range is a first monitor occasion in the more than one monitor occasion (MO).

30. The method according to claim 26, wherein

the first duration is an absolute time value, or, the first duration is a value in a unit of a first time domain unit, or,
the first duration consists of a frame-level gap and a symbol-level gap.

31. The method according to claim 25, wherein the time domain range is a paging occasion (PO).

32. The method according to claim 31, further comprising:
sending fourth information to the user equipment; wherein the fourth information is used to indicate offsets corresponding to M monitor occasions in a paging occasion (PO), and the offset is an offset of the starting position of the listening period corresponding to the monitor occasion relative to a first moment, and the listening period corresponding to the monitor occasion is used to listen to a wake up signal corresponding to the monitor occasion; wherein M is a number of beams corresponding to the paging occasion (PO), and the first moment is a starting position of the listening period.

33. The method according to claim 31, further comprising:
sending fifth information to the user equipment; wherein the fifth information is used to indicate a first step length, and the first step length is an offset of a third moment relative to a second moment, the third moment is a starting moment of a listening period corresponding to a latter monitor occasion (MO) in two adjacent monitor occasions (MOs), and the second moment is a starting moment of a listening period corresponding to a previous monitor occasion (MO) in the two adjacent monitor occasions (MOs).

34. The method according to claim 33, further comprising:
the first step length is longer than a duration of the wake up signal.

**35.** The method according to any one of claims 31 to 34, wherein
one synchronization information block beam corresponds to more than one monitor occasion (MO) in one PO, and M monitor occasions in the paging occasion (PO) comprise a first monitor occasion in one PO corresponding to each synchronization information block beam.

**36.** The method according to claim 35, wherein
the time domain range is a paging frame (PF).

**37.** The method according to claim 36, further comprising:
sending sixth information to the user equipment; sixth information; wherein the sixth information is used to indicate an offset corresponding to each paging occasion (PO) corresponding to the paging frame (PF), the offset is an offset of the starting position of the listening period corresponding to the paging occasion (PO) relative to a fourth moment, and the listening period corresponding to the paging occasion (PO) is used to listen to a wake up signal corresponding to the paging occasion (PO); the fourth moment is the starting position of the listening period.

**38.** The method according to claim 36, further comprising:
sending seventh information to the user equipment; wherein the seventh information is used to indicate a second step length, and the second step length is an offset of a sixth moment relative to a fifth moment, the sixth moment is a starting moment of a listening period corresponding to a latter paging occasion (PO) in two adjacent paging occasions (POs), and the fifth moment is a starting moment of a listening period corresponding to a previous paging occasion (PO) in the two adjacent paging occasions (POs).

**39.** The method according to claim 38, further comprising:
the second step length being greater than or equal to a first product, wherein the first product is a product of a number of synchronization signal blocks and a duration of a wake up signal.

**40.** The method according to claim 37 or 39, further comprising:
sending eighth information to the user equipment; wherein the eighth information is used to indicate offsets corresponding to N monitor occasions in the paging occasion (PO), wherein the offset is an offset of the starting position of the listening period corresponding to the paging occasion relative to the starting position of the listening period corresponding to the paging occasion, and the listening period corresponding to the paging occasion (PO) is used to listen to a wake up signal corresponding to the paging occasion (PO), wherein N is a number of beams corresponding to the paging occasion (PO).

**41.** The method according to claim 37 or 39, further comprising:
sending ninth information to the user equipment, wherein the ninth information is used to indicate a third step length, and the third step length is an offset of an eighth moment relative to a seventh moment, wherein the eighth moment is a starting moment of a listening period corresponding to a latter monitor occasion (MO) in two adjacent monitor occasions (MOs), and the seventh moment is a starting moment of a listening period corresponding to a previous monitor occasion (MO) in the two adjacent monitor occasions (MOs).

**42.** The method according to any one of claims 36 to 41, wherein
a wake up signal corresponding to the paging frame (PF) comprises an identifier of the paging frame (PF).

**43.** The method according to any one of claims 31 to 41, wherein
a wake up signal corresponding to the paging occasion (PO) comprises an identifier of the paging occasion (PO).

**44.** The method according to any one of claims 25 to 43, wherein
a frequency domain position of the wake up signal is one of following:

being the same as a frequency domain position of a synchronization signal block;
being the same as a frequency domain position of a resource set CORESET#0;
being the same as a frequency domain position of an initial bandwidth part.

**45.** An apparatus for listening to a wake up signal, comprising:
a processing module, configured to obtain first information, wherein the first information is used to determine a first duration corresponding to a time domain range; wherein the first duration is a first gap from a starting position of the time domain range to a starting position of a listening period corresponding to the time domain range, and the listening period is used to listen to a wake up signal corresponding to the time domain range; and further configured to determine the starting position of the listening period based on the first duration; and further configured to listen to the wake up signal based on the starting position of the listening period.

**46.** An apparatus for listening to a wake up signal, comprising:

a transceiver module, configured to send first information to a user equipment; wherein the first information is used to determine a first duration corresponding to a time domain range, the first duration is a first gap from a starting position of the time domain range to a starting position of a listening period corresponding to the time domain range, and the listening period is used to listen to a wake up signal corresponding to the time domain range; and further configured to send a wake up signal.

47. A communication apparatus, comprising a processor and a memory, wherein

> the memory is configured to store a computer program; and
> the processor is configured to execute the computer program to implement the method according to any one of claims 1-24.

48. A communication apparatus, comprising a processor and a memory, wherein

> the memory is configured to store a computer program; and
> the processor is configured to execute the computer program to implement the method according to any one of claims 25-44.

49. A computer-readable storage medium, wherein instructions are stored in the computer-readable storage medium, and when the instructions are invoked and executed on a computer, the computer executes the method according to any one of claims 1-24.

50. A computer-readable storage medium, wherein instructions are stored in the computer-readable storage medium, and when the instructions are invoked and executed on a computer, the computer executes the method according to any one of claims 25-44.

Wireless communication system 100

FIG. 1

| 0 | 1 | 2 | 3 | 4 | 5 | 6 | 7 | 0 | 1 | 2 | 3 | 4 | 5 | 6 | 7 |

One PO(S=8,X=2)

FIG. 2

| Network device | | User equipment |

S301, Send first information; the first information is used to indicate a first duration corresponding to a time domain range

S302, Send a wake up signal

S303, Determine a starting position of the listening period based on the first duration

S304, Listen to the wake up signal based on the starting position of the listening period

FIG. 3

The user equipment acquires a first duration corresponding to a time domain range — S401

The user equipment determines the starting position of the listening period based on the first duration, and listens to the wake up signal based on the starting position of the listening period — S402

FIG. 4

The user equipment obtains a first duration corresponding to a monitor occasion (MO) in a paging occasion (PO) — S501

The user equipment determines the starting position of the listening period based on the first duration, and listens to the wake up signal based on the starting position of the listening period — S502

FIG. 5

PO

MO#0    MO#1    MO#2    MO#3

◄——First duration corresponding to MO#0——►

◄——First duration corresponding to MO#1——►

◄——First duration corresponding to MO#2——►

◄——First duration corresponding to MO#3——►

FIG. 6

Obtain first information, the first information including second information and third information ⟋S701

Determine a first duration based on a second gap and a duration of the listening period, where the first duration is a gap from the starting position of the monitor occasion (MO) to a starting position of the listening period corresponding to the monitor occasion (MO) ⟋S702

Determine the starting position of the listening period based on the first duration ⟋S703

Listen to a wake up signal based on the starting position of the listening period ⟋S704

FIG. 7

Determine a first duration corresponding to the paging occasion (PO) ⟋S801

Determine a starting position of the listening period based on the first duration, and listen to the wake up signal based on the starting position of the listening period ⟋S802

FIG. 8

PO

MO    MO    MO    MO

|←——First duration corresponding to PO——→|
|←1 slot→|
|←——2 slots——→|
|←———3 slots———→|

FIG. 9

Obtain a first duration corresponding to a
paging frame (PF)

S1001

Determine a starting position of the listening
period based on the first duration, and listen to
the wake up signal based on the starting
position of the listening period

S1002

FIG. 10

FIG. 11

1200

Transceiver module ~1601 → Processing module ~1202

FIG. 12

1300

1302

1304

Memory

Processing
component

Communication
component

1316

1306

Power
component

Processor

1308

Multimedia
component

1320

Sensor
component

1314

1310

Audio
component

Input/
output interface

1312

FIG. 13

1400

Transceiver
module

1401

Processing
module

1402

FIG. 14

1500

```
1502 ──┐  ┌──────────────┐      ┌──────────────┐  ┌── 1506
        │  │  Processor   │      │ Power supply │  │
           └──────────────┘      │  component   │
                                 └──────────────┘

1501 ──┐  ┌──────────────┐      ┌────────────────────────┐
        │  │   Memory     │      │  ┌──────────────┐ ─ 1504
           └──────────────┘      │  │Radio frequency│
                                 │  │  component    │
                                 │  └──────────────┘
                                 │       ┌──────────────┐ ─ 1505
                                 │       │   Antenna    │
                                 │       └──────────────┘
                                 └────────────────────────┘ ── 1503
```

FIG. 15

## INTERNATIONAL SEARCH REPORT

International application No.

**PCT/CN2022/077764**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

H04W; H04Q; H04J; H04B

Documentation searched other than minimum documentation to the extent that such documents are included in the fields searched

Electronic data base consulted during the international search (name of data base and, where practicable, search terms used)

CNTXT; ENTXT; CNKI; 3GPP: 监听, 唤醒, 间隔, 时间, 用户设备, 第一; monitor, UE, time, wake up, interval

### C. DOCUMENTS CONSIDERED TO BE RELEVANT

| Category* | Citation of document, with indication, where appropriate, of the relevant passages | Relevant to claim No. |
|---|---|---|
| X | CN 113950073 A (HUAWEI TECHNOLOGIES CO., LTD.) 18 January 2022 (2022-01-18) description, paragraphs 0081-0231, and figures 1-16 | 1-9, 24-31, 44-50 |
| A | CN 110958672 A (BEIJING SAMSUNG TELECOM R&D CENTER et al.) 03 April 2020 (2020-04-03) entire document | 1-50 |
| A | CN 111200870 A (SPREADTRUM COMMUNICATIONS SHANGHAI INC.) 26 May 2020 (2020-05-26) entire document | 1-50 |
| A | WO 2020030497 A1 (SONY CORP.) 13 February 2020 (2020-02-13) entire document | 1-50 |
| A | WO 2019027242 A1 (SAMSUNG ELECTRONICS CO., LTD.) 07 February 2019 (2019-02-07) entire document | 1-50 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 May 2022** | **27 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/077764**

| Patent document cited in search report | | | Publication date (day/month/year) | Patent family member(s) | | | Publication date (day/month/year) |
|---|---|---|---|---|---|---|---|
| CN | 113950073 | A | 18 January 2022 | None | | | |
| CN | 110958672 | A | 03 April 2020 | EP | 3841797 | A1 | 30 June 2021 |
| | | | | KR | 20210010636 | A | 27 January 2021 |
| CN | 111200870 | A | 26 May 2020 | WO | 2021139829 | A1 | 15 July 2021 |
| WO | 2020030497 | A1 | 13 February 2020 | JP | 2021533688 | A | 02 December 2021 |
| | | | | US | 2021185611 | A1 | 17 June 2021 |
| | | | | EP | 3834499 | A1 | 16 June 2021 |
| WO | 2019027242 | A1 | 07 February 2019 | US | 2021144641 | A1 | 13 May 2021 |
| | | | | US | 2022124619 | A1 | 21 April 2022 |

Form PCT/ISA/210 (patent family annex) (January 2015)

33